## Europäisches Patentamt
## European Patent Office
## Office européen des brevets

(19)

(11) Veröffentlichungsnummer: **0 004 675**
**B1**

(12)

# EUROPÄISCHE PATENTSCHRIFT

(45) Veröffentlichungstag der Patentschrift: **13.07.83**

(51) Int. Cl.³: **E 02 B 15/04, B 65 D 88/78**

(21) Anmeldenummer: **79101062.2**

(22) Anmeldetag: **07.04.79**

(54) **Sperre in Form eines Stauwehres zum Aufstauen von auf Gewässern schwimmender Verunreinigungen.**

(30) Priorität: **11.04.78 DE 2815687**

(43) Veröffentlichungstag der Anmeldung:
**17.10.79 Patentblatt 79/21**

(45) Bekanntmachung des Hinweises auf die Patenterteilung:
**13.07.83 Patentblatt 83/28**

(84) Benannte Vertragsstaaten:
**FR GB IT NL SE**

(56) Entgegenhaltungen:
**CA - A - 882 987**
**DE - A - 1 942 930**
**DE - A - 2 157 155**
**FR - A - 1 518 544**
**US - A - 3 703 811**
**US - A - 4 065 923**

(73) Patentinhaber: **Arbter, Conrad**
**Hauptstrasse 23**
**D-8741 Saal a.d. Saale (DE)**

(72) Erfinder: **Arbter, Conrad**
**Hauptstrasse 23**
**D-8741 Saal a.d. Saale (DE)**

(74) Vertreter: **Engelhardt, Guido**
**Ehlersstrasse 17**
**D-7990 Friedrichshafen1 (DE)**

Courier Press, Leamington Spa, England.

## Sperre in Form eines Stauwehres zum Aufstauen von auf Gewässern schwimmenden Verunreinigungen

Bei Tankerhavarien oder anderen Unfällen werden Gewässer durch auslaufendes Öl oftmals in einem erheblichen Maße verschmutzt, so daß vielseitige Anstrengungen unternommen werden, dieses Öl aufzufangen. Durch chemische Mittel, mit deren Hilfe das Schweröl zum Absinken zu bringen ist, kann mitunter zwar verhindert werden, daß das Öl an Strände angespült wird und diese verseucht, die Meeresfauna und Fischgründe werden dadurch aber stark beeinträchtigt, so daß dieses Verfahren zur Beseitigung von Ölverunreinigungen nur in Ausnahmefällen angewandt werden sollte.

Um bei sogenannten Ölunfallen auf Binnengewässern das ausgeflossene Öl aufzustauen, ist es bereits bekannt, aufblasbare Schläuche um das Öl zu legen und dieses abzusaugen (US—A—3 703 811 oder DE—A—2 157 155). Die Schläuche werden hierbei z. B. mittels Bajonettverschlüssen miteinander luftdicht verbunden und nach dem Auslegen von Land aus aufgepumpt. Bei ruhigem Gewässer kann mit derartigen Schläuchen, die auch mit einer in das Wasser ragenden Schürze versehen sein können, zwar das Öl am Auseinanderfließen gehindert werden, sobald jedoch Gewell vorhanden ist, wird das Öl über die Schläuche hinweg und auch unter diesen hindurchgespült, so daß diese keine wirksame Barriere bilden. Ein Einsatz dieser bekannten Staumittel auf offener See ist daher, zumal auch nur jeweils eine geringe Ölmenge aufgestaut werden kann, nicht möglich.

Des weiteren ist durch die DE—A—21 57 155 eine Sperre der eingangs genannten Art bekannt. Die Schwimmkörper sind hierbei an den Stirnseiten, die jeweils über ein durch das Innere des Behälters hindurchgeführtes Spannglied in Form eines Kabels miteinander verbunden sind, mit besondersartig ausgebildeten auswendigen Verbindungseinrichtungen zur gegenseitigen Befestigung versehen, die den auf See auftretenden Kräften jedoch nicht gewachsen sind.

Durch die DE—A—1 942 930 ist eine Sperre in Form eines Stauwehres zum Aufstauen von auf Gewässern schwimmenden Verunreinigungen bekannt, bei welcher das Stauwehr aus einem oder mehreren miteinander koppelbaren Behältern gebildet ist, welche aus jeweils zwei ineinander angeordneten und an ihren Enden durch Kappen fest miteinander verbundenen Rohren von im wesentlichen kreisförmigen Querschnitt bestehen, die aus verschleißfestem Kunststoff hergestellt und mittels durch das innere Rohr hindurchführbare Zugglieder, z. B. ein Kabel, miteiander koppelbar sind.

Die einzelnen Behälter enthalten eine Füllung aus Schwimmeroder Auftriebsmaterial, wie geschäumtes oder geblähtes Polystyrol in Form von Teilchen oder Perlen. Das Material ist so beschaffen, daß es weder Wasser noch Öl aufsaugt und so seine Schwimmkraft bewahrt, dabei die Verunreinigung aber zurückhalten kann.

Die Enden der einzelnen Behälter sind von zwei scheibenförmigen Kappen eingefaßt. Die beiden benachbarten äußeren Scheiben sind jeweils unter Zwischenschaltung von einer oder mehreren elastomeren Scheiben miteinander verbunden. Die so verbundenen Abschnitte werden durch ein durchlaufendes Seil oder einen Draht getragen. Zur Verbesserung der Sperrwirkung gegen die Verunreinigung sind die Behälter oder deren netzartige Überzüge mit einer durch Ballast beschwerten, ins Wasser ragenden Schürze versehen.

Eine auf diese Weise gebildete Sperre stellt eine in sich praktisch starre Einheit dar, so daß sie im Grunde genommen nur auf ruhigen Gewässern funktionsfähig ist. Wegen der Füllung der einzelnen Behälter mit schwimmfähigem Material bietet die Sperre auxh keine Zwischenlagermöglichkeit für die gestaute und so aufgefangene Verunreinigung. Außerdem sind die Verbindungseinrichtungen der Sperre relativ aufwendig.

Der Erfindung liegt die Aufgabe zugrunde, eine Sperre in Form eines Stauwehres zum Aufstauen von auf Gewässern schwimmenden Verunreinigungen, insbesondere zum Aufstauen von Öl zu schaffen, die sehr beweglich und dennoch stabil ist, so daß sie bei starkem Wellengang und damit auch auf offener See funktionstüchtig ist. Ferner sollen die Behälter zur zwischenzeitlichen Lagerung der Verunreinigung verwendbar sein und ihre Eintauchtiefe soll dem Füllungsgrad angepaßt werden Können. Die Ballastgewichte sollen einfach entfernbar und der Bauaufwand soll möglichst gering sein. Die Bestandteile der Sperre sollen außerdem im unbenutzten Zustand eine möglichst geringes Volumen haben und somit für den Transport einen geringen Stauraum benötigen.

Gemäß der Erfindung wird dies durch die im Patentanspruch 1 genannten Merkmale erreicht.

Eine Verbesserung der Festigkeit der Sperre ergibt sich bei einer Ausführung nach den Merkmalen des Anspruches 2.

Weitere vorteilhafte Ausbildungen der Sperre zur Verbesserung ihrer Sperrwirkung gegen Über- oder Unterspülen und eine Erhöhung ihrer Elastizität ergeben sich durch die in den Ansprüchen 3 bis 6 angegebenen Maßnahmen.

Die gemäß der Erfindung ausgebildete Sperre in Form eines Stauwehres zum Aufstauen von auf Gewässern schwimmender Verunreinigungen ist nicht nur sehr einfach in ihrer konstruktiven Ausgestaltung, sondern auch liecht zu handhaben und gewährleistet vor allem ein zuverlässiges Aufstauen von Verunrteinigungen in großen Mengen und auch bei starkem Wellengang. Durch die vorgeschlagene Ausgestaltung ist nämlich sichergestellt, daß, zumal die Behälter mit einer beschwerten Schürze sowie einer Überschwappnase versehen sein können, auslaufendes Öl durch das durch diese gebildete Wehr aufgestaut wird. Da das Zugglied somit lediglich das innere Rohr durchgreift, ist hierbei eine hohe Elastizität der Sperre, vor allem aber eine außerordentlich hohe Festigkeit gewährleistet. Die einzelnen Behälter können dabei gewissermaßen auf das Zugglied aufgefädelt werden und sind somit nicht unmittelbar miteinander verbunden. Auch kann das abgesaugte Öl zwischenzeitlich in den Behältern gelagert werden, so daß dadurch deren Stabilität weiter erhöht wird.

Die über eine Ankerkette oder eine Stahltrosse als Zugglied fest miteinander verbundenen Behälter sind in der jeweils erforderlichen Anzahl ohne Schwierigkeiten mit Hilfe von Schleppern um das ausgeflossene Öl zu legen, um dieses am Abtreiben zu hindern. Dabei ist es vielfach ausreichend, daß in Wind- oder Strömungsrichtung um das Öl ein halbkreisförmiger Ringabschnitt, in den das Öl hineinströmt, gelegt wird. Mittels Saugeinrichtungen kann es sodann von der Wasseroberfläche abgesaugt werden, so daß ohne chemische Mittel zuverlässig eine weitere Verseuchung des Wassers und/oder der anliegenden Strände verhindert wird. Und da sich die flexiblen Behälter der Wasseroberfläche anpassen und diese außerdem mit Schürzen und Überschwappnasen ausgerüstet sind, ist auch bei rauher See ausgeschlossen, daß das Stauwehr unter- oder überspült wird.

Die einzelnen Behälter sind auch ohne große Schwierigkeiten wirtschaftlich herstellbar und, da diese im nicht aufgeblasenen Zustand wenig Bauraum beanspruchen, leicht zu transportieren, so daß diese von Tankern mitgeführt werden können. Auf diese Weise ist sichergestellt, daß unmittelbar nach einer Havarie ein Stauwehr, u. U. von dem beschädigten Schiff selbst, erstellt und das ausströmende Öl aufgestaut werden kann und somit eine Verseuchung durch Öl zuverlässig verhindert wird.

Weitere Einzelheiten der gemäß der Erfindung ausgebildeten Sperre in Form eines Stauwehres zum Aufstauen von auf Gewässern schwimmender Verunreinigungen sind den in der Zeichnung dargestellten Ausführungsbeispielen, die nachfolgend in einzelnen erläutert sind, zu entnehmen. Hierbei zeigen:

Fig. 1: ein havariertes Schiff mit einem um dieses angeordneten aus einzelnen Behältern gebildeten Stauwehr zum Aufstauen des ausströmenden Öles,

Fig. 2: einen der das Stauwehr nach Fig. 1 bildenden Behälter im Längsschnitt,

Fig. 3: den Behälter nach Fig. 2 in einem achssenkrechten Schnitt,

Fig. 4: Behälter nach den Fig. 2 und 3 mit zwischen diesen angeordneten Pufferbehältern in verkleinertem Maßstab und

Fig. 5: eine andersartige Ausgestaltung einer Absperrung des Raumes zwischen zwei Behältern bein dem Stauwehr nach Fig. 1.

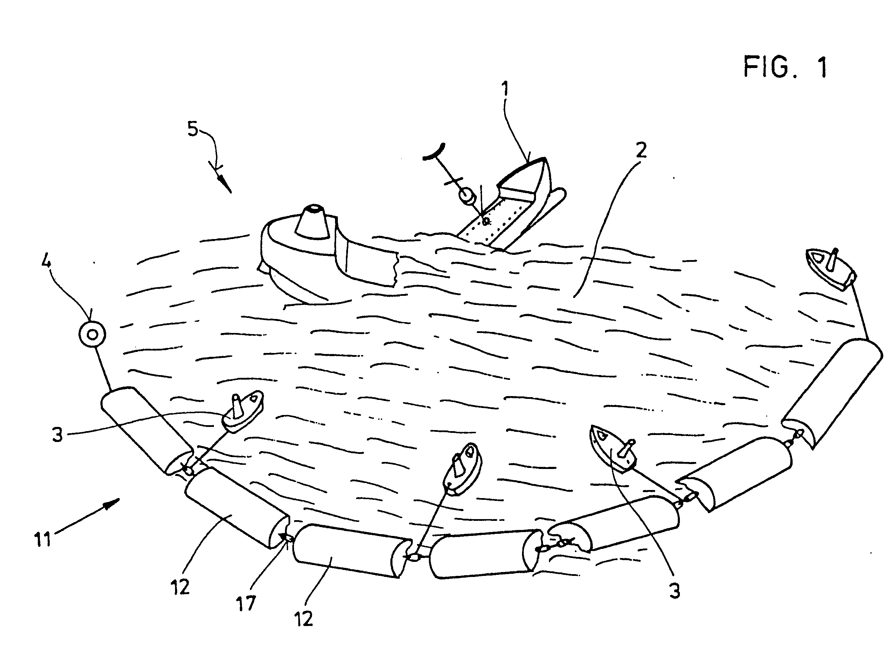

Die in Fig. 1 dargestellte und mit 11 bezeichnete Sperre in Form eines Stauwehrs zum Aufstauen von aus einem havarierten Schiff 1 ausströmenden Öl 2 ist aus einzelnen Behältern 12 gebildet, die mittels Schleppern 3 und/oder Bojen 4 etwa halbkreisförmig um das Schiff 1 angeordnet ist. Das in Richtung des Pfeiles 5 durch Wind oder eine Strömung treibende Öl 2 wird somit in dem Wehr 11 aufgestaut und kann mittels nicht gezeigter Absaugeinrichtungen auf einfache Weise von der Wasseroberfläche entfernt werden.

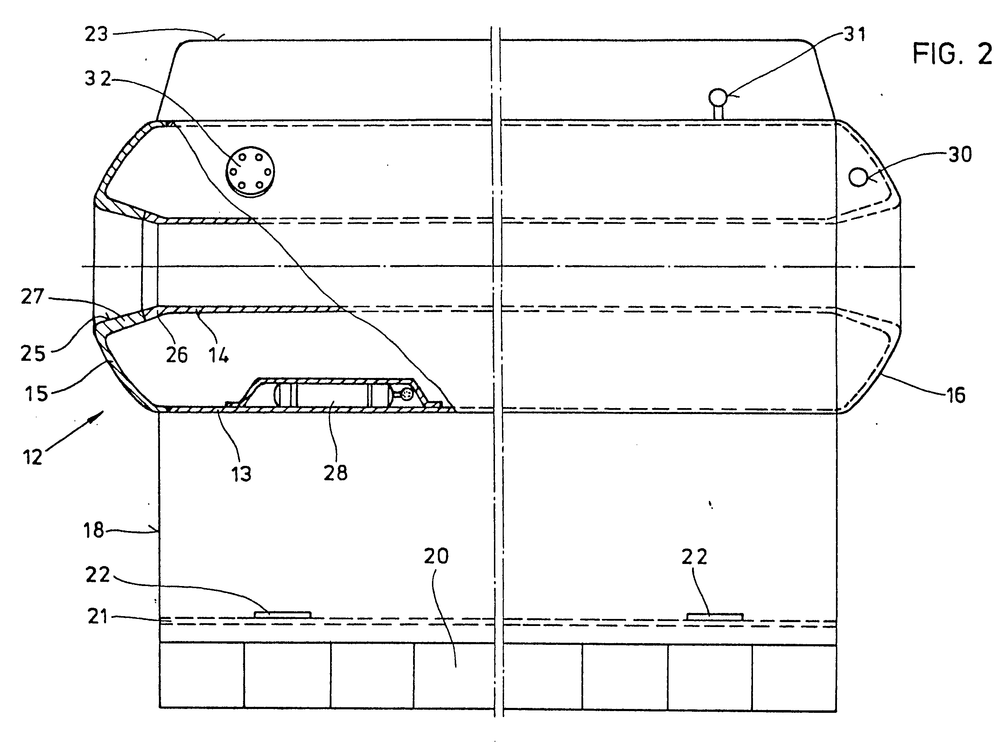

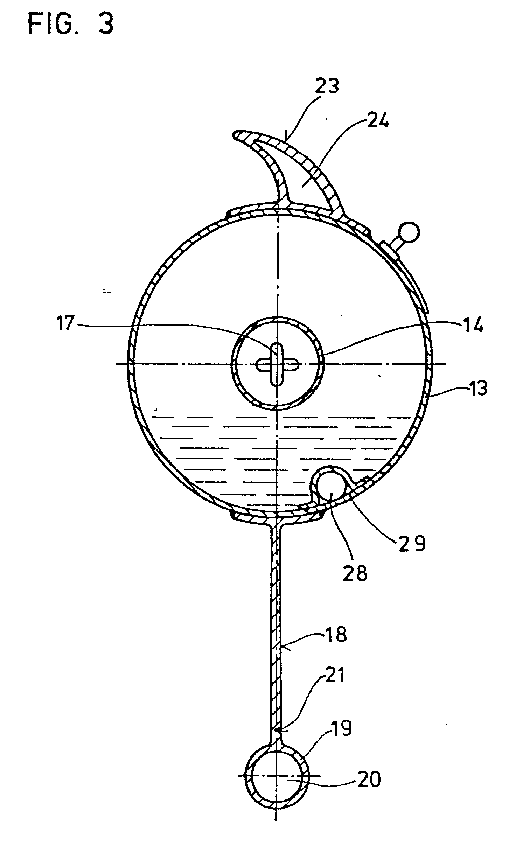

Die einzelnen Behälter 12 sind, wie dies den Fig. 2 und 3 zu entnehmen ist, jeweils aus einem äußeren Rohr und einem in dieses eingesetzten inneren Rohr 14 gebildet, die an den Enden durch Kappen 15 und 16 fest miteinander verbunden sind. Die Rohre 13 und 14 sowie die Kappen 15 und 16 sind aus elastischem verschleißfestem Kunststoff hergestellt, so daß zwar eine hohe Elastizität, damit auch die Behälter 12 sich Wellenbewegungen in etwa anpassen können, aber dennoch auch eine hohe Festigkeit gegeben ist. Beispielsweise können diese Teile aus Nylon und mehreren Polyesterschichten gefertigt werden, wobei es angebracht ist, an den stark beanspruchten Verbindungsstellen Verstärkungen 26 bzw. 27 vorzusehen.

Die Behälter 12 sind, um auch deren Stabilität zu erhöhen und um zu verhindern, daß Öl unter diesen hindurchgespült wird, jeweils mit einer sich über deren axiale Länge erstreckenden Schürze 18 ausgestattet, deren Ende als Schlaufe 19 ausgebildet ist. In die Schlaufe 19 sind Ballastgewichte 20, z. B. Betonsteine eingelegt. Außerdem ist in den Schürzen 18 jeweils eine Sollbruchstelle 21 vorgesehen, an denen die Gewichte 20 mittels Sprengkapseln 22 abgesprengt werden können, wenn beispielsweise die Behälter 12 ganz oder teilweise mit Öl gefüllt sind.

An der der Schürze 18 gegenüberliegenden Seite ist an den Behältern 12 des weiteren eine Überschwappflosse 23 angebracht, deren Innenraum 24 aufblasbar ist. Dazu ist in den Behältern 12 in einer Kammer 29 jeweils eine fernbedienbare Preßluftflasche 28 eingesetzt, mittels denen die Behälter 12 und der Innenraum 24 in der Flosse 23 gemeinsam oder getrennt voneinander aufgeblasen werden können.

Zum Befüllen der Behälter 12 mit Öl oder einer anderen Flüssigkeit sind diese mit einem entsprechenden Ventil 30 sowie einem Entlüftungsventil 31 ausgestattet. Außerdem sind in die Behälter 12, deren axiale Länge bei Einsätzen auf offener See etwa 20—30 m beträgt und die in ihrem äußeren Durchmesser etwa 4—5 m messen, ein Mannloch 32 vorgesehen, so daß die einzelnen Teile auch von innen verschweißt werden können.

Die Behälter 12 werden bei der Erstellung des Stauwehres 11 mittels einer Ankerkette 17 oder einer Stahltrosse fest miteinander gekoppelt, die durch das innere Rohr 14 hindurchgeführt wird. Um die Ankerkette 17 leicht einführen zu können, sind das Rohr 14 und/oder die Kappen 15 und 16 mit einer nach außen gerichteten Erweiterung 25 versehen. Mittels Kauschen od.dgl. können somit die durch die einzelnen Behälter 12 hindurchgeführten Ketten leicht bei der Erstellung des beweglichen Stauwehres 11 aber dennoch fest miteinander verbunden werden.

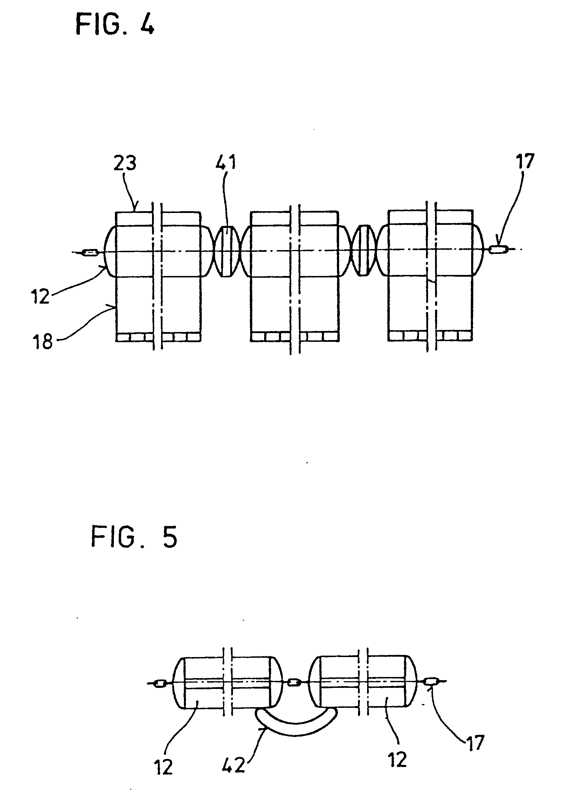

Um zu verhindern, daß durch den zwischen zwei benachbarten Behältern 12 verbleibenden Zwischenraum Öl ausströmt, kann gemäß Fig. 4 zwischen diesen jeweils ein elastischer, ebenfalls aufblasbarer Pufferbehälter 41 angeordnet werden. Zu dem gleichen Zweck können aber auch gemäß Fig. 5 elastische Zwischenglieder 42 vorgesehen werden, die mit je zwei Behältern 12 verbunden werden.

### Patentansprüche

1. Sperre in Form eines Stauwehres zum Aufstauen von auf Gewässern schwimmenden Verunreinigungen, bei welcher das Stauwehr aus einem oder mehreren miteinander koppelbaren Behältern (12) gebildet ist, welche aus jeweils zwei ineinander angeordneten und an ihren Enden durch Kappen (15, 16) fest miteinander verbundenen Rohren (13, 14) von im wesentlichen kreisförmigen Querschnitt bestehen, die aus verschleißfestem Kunststoff hergestellt, mit einer in das Wasser ragenden, mit Ballastgewichten (20) versehenen Schürze (18) an den einzelnen Behältern (12) ausgestattet und mittels durch das innere Rohr (14) hindurchführbare Zugglieder, z. B. ein Kabel, miteinander koppelbar sind, dadurch gekennzeichnet, daß die Behälter (12) hohl und aufblasbar ausgebildet und mit einem Einfüllventil (30) sowie einem Entlüftungsventil (31) versehn sind und ihre Schürze (18) eine Sollbruchzone (21) aufweist, in deren unmittelbarer Nachbarschaft eine oder mehrere fernzündbare Sprengpatronen (22) angeordnet sind.

2. Sperre nach Anspruch 1, dadurch gekennzeichnet, daß die die Rohre (13, 14) verbindenden Kappen (15, 16) nach aussen oder innen gewölbt und die Kappen (15, 16) und/oder das äußere und/oder das innere Rohr (13, 14) an den Verbindungsstellen jeweils mit Verstärkungen (26, 27) versehen sind.

3. Sperre nach Anspruch 1 oder 2, dadurch gekennzeichnet, daß die Behälter (12) mit einer auf der der Schürze (18) gegenüberliegenden Seite aufragenden, im wesentlichen in Anströmrichtung überkragenden, vorzugsweise aufblasbaren Überschwappflosse (23) versehen sind.

4. Sperre nach einem oder mehreren der Ansprüche 1 bis 3, dadurch gekennzeichnet, daß zwischen den einzelnen Behältern (12) elastische, aufblasbare und allseitig bewegliche Pufferbehälter (41) angeordnet sind.

5. Sperre nach einem oder mehreren der Ansprüche 1 bis 4, dadurch gekennzeichnet, daß der Raum zwischen zwei aneinander gekoppelten Behältern (12) mittels eines mit diesen verbundenen, vorzugsweise aufblasbaren elastischen Zwischengliedes (42) abgesperrt ist.

6. Sperre nach einem oder mehreren der Ansprüche 1 bis 5, dadurch gekennzeichnet, daß die Behälter (12) und/oder die Überschwappflossen (23) bzw. die Pufferbehälter (41) und/oder Zwischenglieder (42) jeweils durch eine in diese eingesetzte, vorzugsweise fernsteuerbare Preßluftflasche (28) aufblasbar sind.

### Revendications

1. Un dispositif d'arrêt sous la forme d'un barrage pour l'accumulation des impuretés flottant sur des eaux (courantes), dans lequel le barrage est composé par un ou plusieurs récipients (12) pouvant être accouplés, chacun de ces récipients étant formés par deux tubes (13, 14) disposés l'un dans l'autre et assemblés à leurs extrémités par des capuchons. Ces tubes ont une section essentiellement circulaire, sont réalisés en matière plastique résistant à l'usure, avec une bavette (18) plongeant dans l'eau et alourdie par des poids (20), qui est fixée à chaque récipient (12), et peuvent être accouplés l'un à l'autre à l'aide d'éléments de traction, p. ex. un câble, passant à travers le tube intérieur, caractérisé par le fait que les récipients (12) sont creux et gonflables, équipés d'une valve de gonflage (30) et d'une soupape d'échappement d'air (31) et dont les bavettes (18) possèdent une zone de rupture à une charge déterminée, à proximité immédiate de laquelle se trouvent une ou plusieurs cartouches (22) contenant un explosif et pouvant être mise à feu à distance.

2. Dispositif d'arrêt selon la revendication 1.) caractérisée par le fait que les capuchons (15, 16) qui assemblent les tubes (13, 14) sont concaves ou convexes, ces capuchons (15, 16) et/ou le tube extérieur, et/ou le tube intérieur (13, 14) recevant des renforcements (26, 27) aux points d'assemblage.

3. Dispositif d'arrêt selon les revendications 1 ou 2, caractérisé par le fait que les récipients (12) sont dotés de nageoires antiballottantes (23), de préférence gonflables, du côté opposé à la bavette, venant en saillie principalement dans le sens d'arrivée du courant (amont).

4. Dispositif d'arrêt selon une ou plusieurs des revendications 1 à 3, caractérisé par le fait que des réservoirs-tampons (41) élastiques et gonflables, mobiles de tous côtés sont disposés entre les différents récipients (12).

5. Dispositif d'arrêt selon une ou plusieurs des revendications 1 à 4, caractérisé par le fait que l'espace entre deux récipients (12) accouplés l'un l'autre est fermé par un élément intermédiaire élastique (42), de préférence gonflable, assemblé aux dits récipients (12).

6. Dispositif d'arrêt selon une ou plusieurs des revendications 1 à 5, caractérisé par le fait que les récipients (12) et/ou les nageoires antiballottantes (23) ou les réservoirs-tampons (41) et/ou les éléments intermédiaires (42) peuvent être gonflés par une bouteille d'air comprimé disposée dans ces derniers, de préférence avec télécommande.

**Claims**

1. Barrier construction for collecting pollution floating on water, which barrier comprises one or more containers (12) joinable to each other, the containers consisting of two tubes (13, 14) one of which coaxially located in the other and both fixedly connected to each other by caps (15, 16) having circular cross section, each container (12) made from wear-resistant plastic material and having a guard plate (18) projecting into the water and carrying ballast weights (20), the containers joined together by means of tension members, for example a cable, running through the inner tube (14) characterized in that the containers (12) are hollow and inflatable having a filler valve (30) and a vent valve (31) and their guard plate (18) comprising a breaking area (21) in the direct vicinity of which one or more explosive cartridges (22) are provided.

2. Barrier construction of claim 1, characterized in that the caps (15, 16) connecting the tubes (13, 14) are outwardly or inwardly curved and that the caps (15, 16) and/or the outer and/or the inner tube (13, 14) comprise reinforce areas (26, 27).

3. Barrier construction of claim 1 or 2, characterized in that the container (12) is supplied with a float (23) preventing overflow, the float is located opposite to the guard plate (18) and is overhanging towards the direction of water flow.

4. Barrier construction of one or more of the claims 1 through 3, characterized in that between the individual containers (12) elastic, inflatable and all-round movable buffer containers (41) are located.

5. Barrier construction of one or more of the claims 1 through 4, characterized in that the space between two containers (12) joined to each other is closed by an intermediary elastic member (42) connected to the containers and preferably inflatable.

6. Barrier construction of one or more of the claims 1 through 5, characterized in that the containers (12) and/or floats (23) preventing overflow and the buffer containers (41) and/or the intermediary members (42) respectively are inflatable by a compressed-air cylinder (28) preferably being remote controlled and incorporated into the containers, floats and intermediary members respectively.

FIG. 1

FIG. 2

0 004 675

FIG. 3

FIG. 4

FIG. 5